# EUROPEAN PATENT APPLICATION

(11) **EP 4 831 908 A1**
(43) Date of publication of application: **28.10.2026**
(21) Application number: 25172201.3
(22) Date of filing: 24.04.2025
(51) Int. Cl.: G06T 5/00

(54) **SYSTEM, METHOD, AND COMPUTER PROGRAM FOR POST-PROCESSING IMAGES OF A SCIENTIFIC IMAGING DEVICE**

(71) Applicant: Leica Microsystems CMS GmbH, 35578 Wetzlar (DE)
(72) Inventor: MCELROY, Sean, 35578 Wetzlar (DE); CHOI, Won Yung, 35578 Wetzlar (DE)
(74) Representative: 2SPL Patentanwälte PartG mbB

(57) **Abstract**

Examples relate to a system (110), to a method, and to a computer program or computer-readable medium for post-processing images of a scientific imaging device (120). The system is configured to obtain an image generated by the scientific imaging device, the image showing a sample being observed using the scientific imaging device, the image being one of a plurality of images of the sample generated using the scientific imaging device, process the image using a pre-defined set of image processing tasks to generate a plurality of preview images, with each preview image being based on a separate image processing task, generate a user interface for evaluating the preview images, wherein the user interface comprises a two-dimensional grid of preview images of the plurality of preview images, and provide the user interface.

## Description

### Technical field

Examples relate to a system, to a method, and to a computer program or computer-readable medium for post-processing images of a scientific imaging device.

### Background

Scientific imaging, particularly through the use of microscopes, is an essential tool in modern research and diagnostics. Microscopes allow scientists to visualize structures and phenomena that are beyond the capability of the human eye, facilitating breakthroughs across disciplines such as biology, medicine, materials science, and nanotechnology. Advanced microscopy techniques, including electron, fluorescence, and confocal microscopy, provide detailed insights into cellular processes, molecular interactions, and material compositions.

However, capturing an image with a microscope is just the beginning; post-processing of these images is crucial for extracting meaningful data and achieving high-quality results. Post-processing techniques can significantly enhance image clarity, contrast, and resolution, which are often affected by factors like noise, aberrations, and uneven illumination during capture. Techniques such as deconvolution, filtering, and segmentation help in refining the images to better interpret the underlying structures or phenomena. Furthermore, software tools enable quantitative analysis of these processed images, allowing for precise measurements and comparisons essential for scientific validation and reproducibility.

In the process of analyzing microscopy images, users typically lack knowledge about which methods to use or the ideal settings for each method beforehand. In most cases, users are left with the option of testing each method separately. Within every method, they can experiment with different settings to determine which combination yields the best results. This trial-and-error technique functions as a depth-first search within the realm of available methods and their respective settings. It may require users to have knowledge of every approach. This process can become exceedingly time-consuming, often resulting in frustration since users might inadvertently reach a suboptimal outcome. Moreover, users may settle on a locally optimal solution without realizing that superior options exist elsewhere.

There may be a desire to provide an improved concept for improving the post-processing of images of scientific imaging devices, such as microscopes.

### Summary

This desire is addressed by the subject matter of the independent claims.

Various examples of the present disclosure are based on the finding that many if not most users of scientific imaging devices are unaware of the vast scope of post-processing options provided by a computer system being used to perform the post-processing of the images. For example, many users may choose to use a post-processing preset that has been shown to them by a coworker, a preset that appears first in a list, or a preset that sounds vaguely applicable to the images from the description in a manual. However, in most cases, the preset chosen by the respective user is far from the ideal choice, as the user is likely to be unaware of the image processing options provided by the system. To overcome that barrier, the proposed concept provides a mechanism that allows the user to view and consider multiple presets (e.g., image processing tasks) in parallel visually, providing a matrix-based view of previews to enable the user to analyze and evaluate the different post-processing presets.

Some aspects of the present disclosure relate to a system for post-processing images of a scientific imaging device. The system comprises one or more processors and one or more storage devices. The system is configured to obtain an image generated by the scientific imaging device. The image shows a sample being observed using the scientific imaging device. The image is one of a plurality of images of the sample generated using the scientific imaging device. The system is configured to process the image using a pre-defined set of image processing tasks to generate a plurality of preview images. Each preview image is based on a separate image processing task. The system is configured to generate a user interface for evaluating the preview images. The user interface comprises a two-dimensional grid of preview images of the plurality of preview images. The system is configured to provide the user interface. By generating a plurality of preview images that can be evaluated, at once, by the user, the user is provided with a breadth-first overview of the available image processing options. By showing the preview images using a two-dimensional grid, the user can quickly weigh the pros and cons of the different image processing tasks and choose a suitable image processing task for the subsequent processing of the plurality of images. This way, the system assists the user in selecting a suitable image processing task for the task at hand, enabling most users of scientific imaging devices to select a suitable image processing task without requiring expert knowledge on the details of the image processing operations provided by the system.

In the present context, the term image processing task is used. For example, an image processing task may be a preset that the user can choose (and adapt) for processing the plurality of images. An image processing task may be implemented using an image processing pipeline, with the image processing pipeline comprising one or more image processing tasks and, optionally, corresponding parameters being used to parametrize the one or more image processing tasks. Accordingly, the image processing tasks may differ with respect to at least one of the following: (i) one or more image processing operations being included in the respective image processing task, and (ii) one or more parameters being used for the one or more image processing operations. This way, the user can quickly determine the impact of different image processing operations and parameters via the two-dimensional grid.

To avoid scenarios, in which a user disregards an image processing operation because the preview image is based on parameters that are unsuitable for the task at hand, the two-dimensional grid might not only show image processing tasks that are based on different image operations, but also image processing tasks having the same image processing operations with different parameters or combinations of parameters. For example, the system may be configured to generate the user interface such that preview images of a row of the grid are based on the same one or more image processing operations, with one or more parameters being used for the one or more image processing operations differing across columns of the row. Alternatively, the system may be configured to generate the user interface such that preview images of a column of the grid are based on the same one or more image processing operations, with one or more parameters being used for the one or more image processing operations differing across rows of the column. This way, a breadth-first and depth-first evaluation are combined, so that the user is less likely to disregard image processing tasks having a suitable set of image processing operations, albeit with unsuitable parameters.

In many cases, the image processing tasks are tailored to the analysis of specific structures, such as cells etc. In microscopy images, multiple instances of such structures, e.g., multiple cells, are often shown in the images. The impact of the image processing tasks can be best evaluated when using one of the structures as an example. Accordingly, the system may be configured to crop the image to obtain a cropped image. The system may be configured to process the cropped image using the pre-defined set of image processing tasks to generate the plurality of preview images. This way, the user is able to quickly evaluate the impact of the different image processing tasks on the respective structures. Moreover, as cropping reduces the number of pixels to be processed, processing the cropped image can also significantly lessen the computational load required for generating the previews.

In some cases, when the image is cropped, a portion of the image may be shown that is of little interest to the user or that is not representative of the effects of the image processing tasks. Therefore, means may be provided for the user to adjust the portion of the image used for generating the preview images. In other words, the system may be configured to obtain a user input with respect to changing the portion of the image included in the cropped image. The system may be configured to re-crop the image in response to the user input. The system may be configured to process the re-cropped image using the pre-defined set of image processing tasks to generate the plurality of preview images. This way, a more suitable portion of the image can be selected for the preview images.

In many cases, systems for post-processing images of scientific imaging devices offer a wide range of image processing tasks. If all image processing tasks were shown simultaneously in the user interface, the resulting preview images would likely be too small to be of much use, while generating the preview images would take a long time. Therefore, only a subset of the image processing tasks might be shown at the same time, giving the user the option of changing the subset of image processing tasks being shown. For example, the two-dimensional grid of preview images may be a sub-grid of a larger two-dimensional grid of preview images that is based on a plurality of image processing tasks. The plurality of image processing tasks may comprise the pre-defined set of image processing tasks. This way, not all preview images would have to be generated at once, and the size of the previews can remain suitable for allowing the user to meaningfully choose an image processing task.

For example, the system may be configured to generate the user interface with a user interface element for changing the sub-grid of the larger two-dimensional grid of preview images being shown in the user interface. This way, the user can change the subset of image processing tasks being shown, allowing the user to explore additional options while retaining the improved suitability of the larger preview sizes and the lowered computational load of only generating a subset of preview images.

To enable faster load times, the system might first generate the preview images that are initially shown in the two-dimensional grid of preview images, e.g., followed by the preview images that are not shown, and starting from the preview images that are adjacent to the preview images shown in the user interface. For example, the system may be configured to process the image first using the pre-defined set of image processing tasks (thus generating the preview images that are initially shown in the user interface). The system may be configured to, after processing the image using the pre-defined set of image processing tasks, process the image using one or more image processing tasks from a remainder of the plurality of image processing tasks. This way, the user interface may be populated quickly, allowing the user to start the evaluation process while the remainder of the preview images are generated in the background. In other words, the system may be configured to process the image using the one or more image processing tasks of the remainder of the plurality of image processing tasks in the background while the preview images based on the pre-defined set of image processing tasks are shown in the user interface.

While following this strategy enables the user to quickly start evaluating the image processing tasks via their respective preview images, care may be taken to avoid the evaluation process being delayed as preview images have to be generated on-the-fly as the user changes the selected sub-grid. Thus, the system may be configured to determine an order in which the processing tasks of the remainder of the plurality of image processing tasks are to be used to process the image based on a distance, in the larger two-dimensional grid, between preview images based on the respective processing tasks to preview images currently shown in the user interface and/or based on a history of image processing tasks previously selected by a user using the user interface. This way, in many cases, delays due to preview images being unavailable may be avoided, allowing the user to more quickly and without a break in concentration evaluate the different image processing tasks.

When choosing a suitable image processing task, the user starts with an initial grid of preview images, which should be relevant to the task at hand or relevant to the user. For example, the system may be configured to determine the set of pre-defined image processing tasks and the preview images being used initially for populating the grid of preview images based on a content of the image or based on a history of image processing tasks previously selected by a user using the user interface. This way, the user may start with preview images of relevant image processing tasks, which can accelerate the evaluation process.

In many cases, image processing tasks cannot be customized using only a single parameter but via multiple parameters that can be set by the user. To reduce the time later required for tuning the parameters of the image processing task, users may explore multiple image processing tasks of the same set of image processing operations, with different combinations of parameters. This exploration can be done by selecting an image processing task (which may itself differ from other image processing tasks by one parameter) and then being presented with preview images (in the two-dimensional grid) that are based on image processing tasks having the same image processing operation(s) and different combinations of parameters. Accordingly, the system may be configured to obtain a user input with respect to a selection of an image processing task, with the image processing task including one or more image processing operations. The system may be configured to, after obtaining the user input with respect to a selection of an image processing task, re-populate the two-dimensional grid with preview images being based on image processing tasks being based on the one or more image processing operations and a plurality of parameter values being used for the one or more image processing operations. This way, the user can select variations of the selected image processing tasks that differ from the selected image processing task with respect to the parameters being used.

For example, the system may be configured to re-populate the two-dimensional grid of preview images such that along a first dimension of the two-dimensional grid, a first parameter is varied and along a second dimension of the two-dimensional grid, a second parameter is varied. This way, the user can quickly select the combination of parameters (e.g., as a final selection or as a starting point for further parameter tuning) that is most suitable for the task at hand.

In general, the size of the two-dimensional grid may be a compromise between providing a large number of preview images that can be seen at the same time and providing preview images at sizes suitable for evaluating the impact of the different image processing tasks. For example, the two-dimensional grid may show at least 2 by 2 images (or at least 3 by 2 images, or at least 3 by 3 images, or at least 4 by 3 images), with the first number indicating the number of images shown horizontally and the second number indicating the number of images shown vertically.

In general, the proposed concept may be applied to arbitrary types of image processing tasks. In scientific imaging, one powerful operation is image segmentation. Accordingly, the plurality of image processing tasks may be or may comprise a plurality of image segmentation tasks. Image segmentation, in the context of microscope images, refers to the process of partitioning these images into distinct regions or segments that correspond to different parts of the sample being observed. This technique is used to isolate specific structures, such as cells, organelles, or other biological entities, making it easier to analyze and study their characteristics and behavior in detail. By segmenting the image, researchers can focus on particular areas of interest, facilitating quantitative analysis like measuring sizes, shapes, or counting objects within the sample. Advanced algorithms, including machine learning methods, are often employed to enhance the accuracy and efficiency of this process.

The aim of the proposed concept is to assist the user in selecting a suitable image processing task that can be applied to the entirety of the plurality of images. Accordingly, the system may be configured to obtain a user input with respect to a selection of an image processing task, and to process the plurality of images using the selected image processing task.

Another aspect of the present disclosure relates to a corresponding method for post-processing images of a scientific imaging device. The method comprises obtaining an image generated by the scientific imaging device. The image shows a sample being observed using the scientific imaging device. The image is one of a plurality of images of the sample being generated using the scientific imaging device. The method comprises processing the image using a pre-defined set of image processing tasks to generate a plurality of preview images. Each preview image is based on a separate image processing task. The method comprises generating a user interface for evaluating the preview images. The user interface comprises a two-dimensional grid of preview images of the plurality of preview images. The method comprises providing the user interface.

Another aspect of the present disclosure relates to a computer program having a program code for performing the above method when the program is executed on a processor.

Another aspect of the present disclosure relates to a non-transitory, computer-readable medium comprising a program code that, when the program code is executed on a processor, a computer, or a programmable hardware component, causes the processor, computer, or programmable hardware component to perform the above method.

### Short description of the Figures

Some examples of apparatuses and/or methods will be described in the following by way of example only, and with reference to the accompanying figures, in which:
- Fig. 1: shows a schematic diagram of an example of a system for post-processing images of a scientific imaging device;
- Fig. 2: shows an illustration of an example of a user interface for evaluating preview images;
- Fig. 3: shows a flow chart of an example of a method for post-processing images of a scientific imaging device; and
- Fig. 4: shows a schematic diagram of an example of a system comprising an imaging device and a computer system.

### Detailed Description

Various examples will now be described more fully with reference to the accompanying drawings in which some examples are illustrated. In the figures, the thicknesses of lines, layers and/or regions may be exaggerated for clarity.

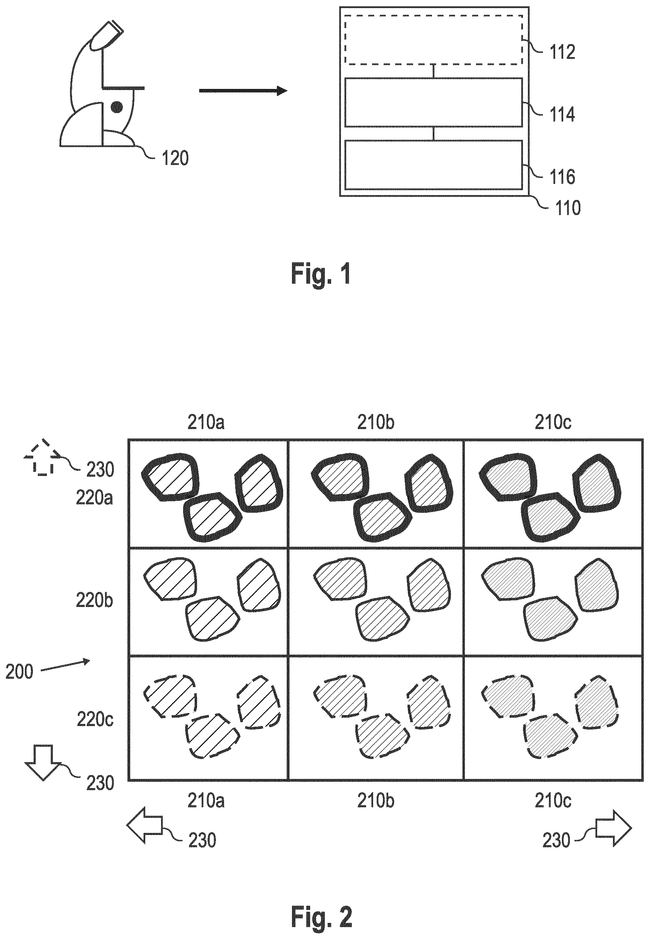

Fig. 1 shows a schematic diagram of an example of a system 110 for post-processing images of (e.g., generated by) a scientific imaging device 120, such as a microscope, an electron microscope, a telescope, an ultrasound imaging device, an X-ray machine, a Magnetic Resonance Imaging (MRI) scanner, or a Computed Tomography (CT) scanner. In many scientific workflows, a scientific imaging device 120 is used to generate a large body of images showing the same sample (e.g., the same cell culture, the same structural part etc.) at different points in time (e.g., during an experiment), at different locations on the sample, or, if the sample comprises a set of sub-samples based on different variations of an experiment, different sub-samples of the sample. To evaluate the effect of the experiment, a human user may compare the different images to determine how the cell culture changes over time, how fatigue is observed in a structural part, or how different sub-samples react to different chemical or biological conditions. In each of these examples, the user benefits from post-processing of the images that highlight properties of the sample that are of interest to the user. The present disclosure thus relates to the post-processing of images of a microscope or other type of scientific imaging device, with "post" indicating that the processing is not (primarily) used while the scientific imaging device generates the images, but after the images have been collected, to prepare the images for analysis.

The system 110 is a computer system that can be used to process the images of the scientific imaging device 120 (or at least process a single image for the purpose of selecting an image processing task for further processing of the larger body of images of the scientific imaging device 120). For example, the system 110 may be part of the scientific imaging device 120, or it may be a workstation computer that is separate from the scientific imaging device 120. For example, the system 110 may be coupled with the scientific imaging device 120 via a computer network, e.g., so the system 110 can obtain (e.g., receive or read out) images of the scientific imaging device 120. In some examples, the system 110 may be a server providing a service for post-processing images of the scientific imaging device 120. In some examples, the server may have a connection to the scientific imaging device 120. In other examples, the server might not have a connection to the scientific imaging device 120.

The system 110 comprises one or more processors 114 and one or more storage devices 116. Optionally, the system 110 further comprises one or more interfaces 112. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other entities, such as the scientific imaging device 120 or a client device (not shown) being used by a user of the system 110), and with the one or more storage devices 116 (for storing information, such as machine-readable instructions of a computer program being executed by the one or more processors). In general, the functionality of the one or more processors 114 may be implemented by one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

The system 110 is configured to obtain an image generated by the scientific imaging device 120. For example, the system 110 may be coupled, via the one or more interfaces 112, with the scientific imaging device 120 and obtain the image directly from the scientific imaging device 120. Alternatively, the user may provide the image to the system. Thus, the system 110 may be configured to obtain the image from the user, e.g., from a flash drive provided by the user or uploaded by the user via a web interface.

As outlined above, the image shows a sample being observed using the scientific imaging device. For example, the sample may be a cell culture or other type of biological or chemical experiment that is contained in a container, such as a petri dish. Alternatively, in material science or experiments related to material fatigue, the sample may be a solid material, such as a part of a machine. In some examples, the sample may comprise a plurality of sub-samples, e.g., different cell cultures or cell lines that are subject to the same experiment. In any case, the image is part of a plurality of images of the sample generated using the scientific imaging device 120, with both the sample and the imaging parameters used by the scientific imaging device 120 remaining constant (or at least similar) across the images. Therefore, the plurality of images is to be processed using the same set of image processing operations (and using the same parameters for the image processing operations), so that the user can evaluate the respective experiment. In the following, an image processing task can be considered a preset that combines one or more image processing operations (of an image processing pipeline) and corresponding parameter(s) for controlling the one or more image processing operations. In other words, image processing tasks may differ with respect to the image processing operation(s) included in the respective image processing task and the parameter(s) used for the one or more image processing operations.

To give a concrete example: When post-processing images of cells, image segmentation is an important part of post-processing. Accordingly, the plurality of image processing tasks may be or may comprise a plurality of image segmentation tasks. There are various different image segmentation algorithms or approaches that can be chosen, along with parameters that can be used at runtime to tweak the performance of the image segmentation. For example, U-Net is a widely known deep learning-based model that is highly effective for biomedical image segmentation. At runtime, the number of filters in convolutional layers and parameters for post-processing techniques like thresholding may be tweaked to refine segmentation results. Some segmentation algorithms are also based on Random Forests (RF). Random Forests are an ensemble learning method that utilizes multiple decision trees to segment images based on features extracted from pixel data. Runtime parameters may include the number of trees in the forest and the maximum depth of each tree, which can influence the model's sensitivity and specificity. The Watershed Algorithm is another image processing technique that is used for separating overlapping objects by treating the grayscale image like a topographical surface. At runtime, parameters such as the marker placement strategy and the compactness parameter may be set, which controls the trade-off between under-segmentation and over-segmentation. Otsu's Method is another thresholding technique that is used to automatically perform clustering-based image segmentation by minimizing intra-class variance. Otsu's method can be parametrized by choosing between adaptive or global thresholding, affecting how the algorithm segments different intensity regions within an image. Similar examples of different algorithms (i.e., image processing operations) and corresponding parameters can be found in any field of post-processing of images of a scientific imaging device.

As the image processing tasks differ, they also yield different results; thus, selecting an image processing task for processing the entirety of the plurality of samples using preview images generated with these various tasks is an efficient approach. The system 110 is configured to process the image using a pre-defined set of image processing tasks to generate a plurality of preview images, each based on a separate image processing task. Therefore, if n different image processing tasks are included in the pre-defined set of image processing tasks, n preview images are generated. The same image is processed using n different image processing tasks, resulting in n different preview images.

While it would be possible to perform the image processing on the entire image, in general, a small portion of the image may suffice to determine whether the respective image processing task is suitable for the task at hand. Thus, the system may be configured to crop the image to obtain a cropped image and process the cropped image using the pre-defined set of image processing tasks to generate the plurality of preview images. For example, the cropped image may cover at most 25% (or at most 20%, or at most 15%, or at most 10%) of the overall area of the image. Initially, the image may be cropped around a portion of the image that is towards the center of the image, e.g., within a square portion of the image that is centered at the center of the image and takes up at most 25% of the image area. However, in some cases, the initial crop may be unsuitable for previewing the image processing tasks. In these cases, the user may be enabled to adjust the crop. In other words, the system may be configured to obtain a user input (e.g., via the user interface, via a pointing device or a touchscreen) with respect to changing a portion of the image included in the cropped image, re-crop the image in response to the user input, and process the re-cropped image using the pre-defined set of image processing tasks to generate the plurality of preview images.

**The** system 110 is configured to generate a user interface for evaluating the preview images. For example, the user interface may be used for selecting one of the image processing tasks based on the preview images. The user interface may be provided via a display of the system 110, a display connected to the system 110, or a display of the scientific imaging device 120. Alternatively, the user interface may be provided via a web browser at a separate (client) device. For example, the user may interact with the user interface using a pointing device (such as a mouse or trackpad), via other types of input devices (such as a keyboard) or via a touchscreen. The system 110 is configured to provide the user interface, e.g., as a display signal for the display, or as data packets comprising code being interpreted by the web browser.

In the proposed concept, a two-dimensional grid 200 (shown in Fig. 2) of preview images is provided as part of the user interface to enable the user to evaluate the image processing tasks and select one of them for processing the plurality of images. Thus, the user interface comprises a two-dimensional grid 200 of preview images of the plurality of preview images. An example of such a user interface is shown in Fig. 2.

Fig. 2 shows an illustration of an example of a user interface for evaluating preview images 200. The preview images 200 form a two-dimensional grid, with three columns 210a-210c and three rows 220a-220c being shown. The user interface further includes user interface elements (arrows 230) for navigating in the grid. In Fig. 2, a 3 x 3 grid of preview images is shown. For example, the two-dimensional grid may show at least 2 by 2 images (or at least 3 by 3 images) and/or at most 5 by 5 images (or at most 4 by 4 images).

In the example shown in Fig. 2, the two-dimensional grid is a sub-grid of a larger grid of preview images. In other words, the two-dimensional grid of preview images may be a sub-grid of a larger two-dimensional grid of preview images, of which only the sub-grid is shown at the time. The larger two-dimensional grid of preview images is based on a plurality of image processing tasks (e.g., an overall set of image processing tasks), which comprises the pre-defined set of image processing tasks. In other words, the pre-defined set of image processing tasks may contain the image processing tasks being used to generate the preview images that are presently shown in the user interface, and the plurality of image processing tasks may be the sum total of image processing tasks that can be used to generate the preview images for the larger two-dimensional grid. However, as the remaining portions of the larger two-dimensional grid are not shown in the user interface, the respective preview images need not necessarily be generated.

In the example shown in Fig. 2, the user can change the sub-grid that is shown in the user interface using the arrows 230, allowing the user to scroll down and left and right. In Fig. 2, the sub-grid is at the top of the larger grid, so that the user cannot scroll further up. Thus, the system 110 may be configured to generate the user interface with a user interface element 230 (e.g., arrows 230) for changing the sub-grid of the larger two-dimensional grid of preview images being shown in the user interface. Using the user interface element 230, the user can scroll through the larger two-dimensional grid of preview images.

It is evident that, as only a sub-grid is shown, in most cases, it is not necessary to generate preview images for each of the image processing tasks to populate the entirety of the larger two-dimensional grid. Instead, the focus may be on first generating the preview images that are (initially) shown in the user interface. In other words, the system may be configured to process the image first using the pre-defined set of image processing tasks. For example, the system 110 may be configured to, after processing the image using the pre-defined set of image processing tasks, process the image using one or more image processing tasks of a remainder of the plurality of image processing tasks (to populate at least some parts of the remainder of the larger two-dimensional grid). This latter task may be performed in the background, while the user is already interacting with the user interface. In other words, the system may be configured to process the image using the one or more image processing tasks of the remainder of the plurality of image processing tasks in the background while the preview images based on the pre-defined set of image processing tasks are shown in the user interface.

To generate at least some of the remaining preview images, a strategy may be chosen that prioritizes preview images that have an increased likelihood of the user wanting to see them. In a scrolling-based user interface, such as the one shown in Fig. 2, this can be done by first generating the preview images that are one row/column away from being shown, then the preview images that are two rows/columns away from being shown etc. In more general terms, the system 110 may be configured to determine an order in which the processing tasks of the remainder of the plurality of image processing tasks are to be used to process the image based on a distance, in the larger two-dimensional grid, of preview images being based on the respective processing tasks to preview images currently shown in the user interface. Alternatively, or additionally, historical usage data may be used to first generate images using image processing tasks that the user has used before and is thus more likely to use again, at least for comparison purposes. Accordingly, the system 110 may be configured to determine the order based on a history of processing tasks previously selected by the user using the user interface.

In the proposed concept, the user starts with an initial (sub-) grid of preview images. To ensure that the user can quickly arrive at a suitable image processing task, the initial selection of image processing tasks for the two-dimensional grid included in the user interface is particularly relevant. In particular, this initial selection can be based on the task at hand, i.e., based on the sample being shown. In other words, the system 110 may be configured to determine the set of pre-defined image processing tasks and the preview images used initially for populating the grid of preview images based on the content of the image. For example, the user may be prompted to provide information on the content of the image (e.g., the type of sample being used), or the system 110 may use an image classification machine-learning model to predict the content of the image. Moreover, users tend to prefer image processing tasks they have used before, at least as a frame of reference for evaluating the image processing tasks. Accordingly, the system 110 may be configured to determine the set of pre-defined image processing tasks and the preview images used initially for populating the grid of preview images based on the history of image processing tasks previously selected by the user using the user interface.

In some scenarios, it is useful not only to present the results of different image processing pipelines (including one or more image processing operations), but also the results when different parameters are used for the one or more image processing operations. For example, when segmenting objects, multiple segmentation approaches may be used, and multiple results may be presented to the user all at once. This can become one axis in the matrix (two-dimensional grid). The second axis may be variations of settings (e.g., parameters) for each method. In this way, the user is presented with a 2D matrix of results, and they can visually compare them side by side to find which approach they prefer. For example, referring to Fig. 2, the system 110 may be configured to generate the user interface such that preview images of a row 220a, 220b, 220c of the grid are based on the same one or more image processing operations (i.e., the same image processing pipeline), with one or more parameters being used for the one or more image processing operations differing across columns 210a, 210b, 210c of the row. In the context of the previous example: Each row 220a, 220b, 220c may show a different segmentation approach, and each row a different value for a main segmentation parameter. Using the arrows 230 on the left, the user can select different segmentation approaches, using the arrows 230 at the bottom, the user can select different values for the main segmentation parameter (from lower to higher). For example, the preview image at the center of the grid (at the intersection of column 210b and row 220b) may be the currently selected preview image (and thus image processing task).

Alternatively, the axes may be switched. In other words, the system 110 may be configured to generate the user interface such that preview images of a column 210a, 210b, 210c of the grid are based on the same one or more image processing operations, with one or more parameters being used for the one or more image processing operations differing across rows 220a, 220b, 220c of the column.

The same user interface may also be used if the user has already selected an image processing pipeline (i.e., one or more image processing operations), and optionally the main parameter (via the second axis), and now needs to decide between different secondary parameters. For example, the user can select one of the preview images/image processing tasks and "drill down" into the image processing task to explore variations of secondary parameters. For example, the system 110 may be configured to obtain a user input with respect to a selection of an image processing task, with the image processing task including one or more image processing operations. Once the user has selected the image processing task, he or she may switch the view and be presented with image processing tasks that are based on the same image processing operation(s), with different parameters. For example, the system 110 may be configured to, after obtaining the user input with respect to a selection of an image processing task, re-populate the two-dimensional grid with preview images being based on image processing tasks being based on the one or more image processing operations and a plurality of parameter values being used for the one or more image processing operations. For example, in Fig. 2, the y-axis (rows of the grid) may be used to select a parameter value along dimension A (e.g., with higher values at the top and lower values at the bottom), and the x-axis (columns of the grid) may be used to select a parameter value along dimension B (e.g., with lower values to the left and higher values to the right). In other words, the system 110 may be configured to re-populate the two-dimensional grid of preview images such that along a first dimension of the two-dimensional grid (e.g., along the y-axis or across rows), a first parameter may be varied and along a second dimension of the two-dimensional grid (e.g., along the x-axis or across columns), a second parameter may be varied.

At some point, the user has selected an image processing task. Then, this image processing task may be used to process the plurality of images. For example, the image processing may be performed by the system 110. In other words, the system 110 may be configured to obtain a user input with respect to the selection of an image processing task, and to process the plurality of images using the selected image processing task. Alternatively, the image processing may be performed by another system. In this case, the system 110 may be configured to provide (e.g., export) information on the selected image processing task for the other system, e.g., via a computer network, via flash drive, or on a display or printout that the user can use to select the image processing task at the other system.

The proposed concept provides an analysis tool that automates a preview-based evaluation of many image processing tasks (e.g., as many parameters/settings as possible), by capturing user input that helps the system automatically determine settings for multiple analysis algorithms. Once the setup is complete, the user may be taken to a screen (user interface) where they can see results from multiple algorithms simultaneously (e.g., vertically) and also see variations in settings for those algorithms (e.g., horizontally). Each of the result visualizations (e.g., generation of preview images) may be run in the background and appear as quickly as possible in the user interface. The physical space being processed may be limited to ensure that the results can appear quickly. The user can optionally narrow down to a single algorithm and then have a two-dimensional space for 2 parameter adjustments for that algorithm. The user can optionally choose/move horizontally and/or vertically which will present new result visualizations in the newly created space. In this way, they can scan through variations of settings parameters. The variations of settings parameters may have noticeable step distances, such that two adjacent result visualizations would not be overly similar.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

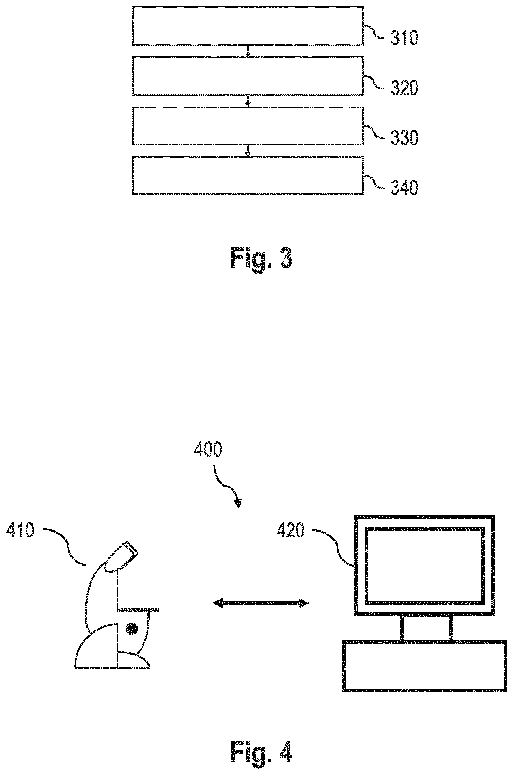

More details and aspects of the system 110, the scientific imaging device 120 and the user interface are mentioned in connection with the proposed concept or one or more examples described above or below (e.g., Figs. 3 to 4). The system 110, the scientific imaging device 120 and the user interface may comprise one or more additional optional features corresponding to one or more aspects of the proposed concept or one or more examples described above or below.

Fig. 3 shows a flow chart of an example of a corresponding method for post-processing images of a scientific imaging device. The method comprises obtaining 310 an image generated by the scientific imaging device. The image shows a sample being observed using the scientific imaging device. The image is one of a plurality of images of the sample being generated using the scientific imaging device. The method further comprises processing 320 the image using a pre-defined set of image processing tasks to generate a plurality of preview images. Each preview image is based on a separate image processing task. The method comprises generating 330 a user interface for evaluating the preview images. The user interface comprises a two-dimensional grid of preview images of the plurality of preview images. The method comprises providing 340 the user interface. For example, the method may be performed using the system 110 of Fig. 1. Features introduced in connection with the system 110 of Fig. 1 may likewise be included in the corresponding method of Fig. 3.

More details and aspects of the method are mentioned in connection with the proposed concept or one or more examples described above or below (e.g., Figs. 1, 2 and/or 4). The method may comprise one or more additional optional features corresponding to one or more aspects of the proposed concept or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a scientific imaging device comprising a system as described in connection with one or more of the Figs. 1 to 3. Alternatively, a scientific imaging device may be part of or connected to a system as described in connection with one or more of the Figs. 1 to 3. Fig. 4 shows a schematic illustration of a system 400 configured to perform a method described herein. The system 400 comprises a scientific imaging device 410, such as microscope, and a computer system 420. The scientific imaging device 410 is configured to take images and is connected to the computer system 420. The computer system 420 is configured to execute at least a part of a method described herein. The computer system 420 may be configured to execute a machine learning algorithm. The computer system 420 and scientific imaging device 410 may be separate entities but can also be integrated together in one common housing. The computer system 420 may be part of a central processing system of the scientific imaging device 410 and/or the computer system 420 may be part of a subcomponent of the scientific imaging device 410, such as a sensor, an actor, a camera or an illumination unit, etc. of the scientific imaging device 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a scientific imaging device or a scientific imaging device component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all the functionalities of the methods described herein. In some embodiments, a field programmable gate array may cooperate with a microprocessor to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of reference Signs

- 110: System
- 120: Scientific imaging device, microscope
- 200: Two-dimensional grid of preview images 210a-c Columns
- 220a-c: Rows
- 230: User interface elements, arrows
- 310: Obtaining an image
- 320: Processing the image using a pre-defined set of image processing tasks to generate preview images
- 330: Generating a user interface
- 340: Providing the user interface
- 400: System
- 410: Scientific imaging device
- 420: Computer system

## Claims

1. A system (110) for post-processing images of a scientific imaging device (120), the system comprising one or more processors and one or more storage devices, wherein the system is configured to:
obtain an image generated by the scientific imaging device, the image showing a sample being observed using the scientific imaging device, the image being one of a plurality of images of the sample generated using the scientific imaging device;
process the image using a pre-defined set of image processing tasks to generate a plurality of preview images, with each preview image being based on a separate image processing task;
generate a user interface for evaluating the preview images, wherein the user interface comprises a two-dimensional grid (200) of preview images of the plurality of preview images; and
provide the user interface.

2. The system according to claim 1, wherein the image processing tasks differ with respect to at least one of one or more image processing operations being included in the respective image processing task and one or more parameters being used for the one or more image processing operations.

3. The system according to claim 2, wherein the system is configured to generate the user interface such, that preview images of a row (220a, 220b, 220c) of the grid are based on the same one or more image processing operations, with one or more parameters being used for the one or more image processing operations differing across columns (210a, 210b, 210c) of the row, or such that preview images of a column (210a, 210b, 210c) of the grid are based on the same one or more image processing operations, with one or more parameters being used for the one or more image processing operations differing across rows (220a, 220b, 220c) of the column.

4. The system according to one of the claims 1 to 3, wherein the system is configured to crop the image to obtain a cropped image, and process the cropped image using the pre-defined set of image processing tasks to generate the plurality of preview images.

5. The system according to one of the claims 1 to 4, wherein the two-dimensional grid of preview images is a sub-grid of a larger two-dimensional grid of preview images being based on a plurality of image processing tasks, the plurality of image processing tasks comprising the pre-defined set of image processing tasks.

6. The system according to claim 5, wherein the system is configured to generate the user interface with a user interface element (230) for changing the sub-grid of the larger two-dimensional grid of preview images being shown in the user interface.

7. The system according to one of the claims 5 or 6, wherein the system is configured to process the image first using the pre-defined set of image processing tasks, and, after processing the image using the pre-defined set of image processing tasks, using one or more image processing tasks of a remainder of the plurality of image processing tasks.

8. The system according to claim 7, wherein the system is configured to process the image using the one or more image processing tasks of the remainder of the plurality of image processing tasks in the background while the preview images being based on the pre-defined set of image processing tasks are shown in the user interface.

9. The system according to one of the claims 7 or 8, wherein the system is configured to determine an order in which the processing tasks of the remainder of the plurality of image processing tasks are to be used to process the image based on a distance, in the larger two-dimensional grid, of preview images being based on the respective processing tasks to preview images currently shown in the user interface and/or based on a history of image processing tasks previously selected by a user using the user interface.

10. The system according to one of the claims 5 to 9, wherein the system is configured to determine the set of pre-defined image processing tasks and the preview images being used initially for populating the grid of preview images based on a content of the image or based on a history of image processing tasks previously selected by a user using the user interface.

11. The system according to one of the claims 1 to 10, wherein the system is configured to obtain a user input with respect to a selection of an image processing task, the image processing task including one or more image processing operations, and to, after obtaining the user input with respect to a selection of an image processing task, re-populate the two-dimensional grid with preview images being based on image processing tasks being based on the one or more image processing operations and a plurality of parameter values being used for the one or more image processing operations.

12. The system according to claim 11, wherein the system is configured to re-populate the two-dimensional grid of preview images such that along a first dimension of the two-dimensional grid, a first parameter is varied and along a second dimension of the two-dimensional grid, a second parameter is varied.

13. The system according to one of the claims 1 to 12, wherein the two-dimensional grid shows at least 2 by 2 images,
and/or wherein the plurality of image processing tasks is a plurality of image segmentation tasks,
and/or wherein the system is configured to obtain a user input with respect to a selection of an image processing task, and to process the plurality of images using the selected image processing task.

14. A method for post-processing images of a scientific imaging device, the method comprising:
obtaining (310) an image generated by the scientific imaging device, the image showing a sample being observed using the scientific imaging device, the image being one of a plurality of images of the sample being generated using the scientific imaging device;
processing (320) the image using a pre-defined set of image processing tasks to generate a plurality of preview images, with each preview image being based on a separate image processing task;
generating (330) a user interface for evaluating the preview images, wherein the user interface comprises a two-dimensional grid of preview images of the plurality of preview images; and
providing (340) the user interface.

15. A computer program having a program code for performing a method according to claim 14 when the program is executed on a processor.
